Europäisches Patentamt

European Patent Office

Office européen des brevets

(19)

(11) Veröffentlichungsnummer : **0 009 079**
**B1**

(12) **EUROPÄISCHE PATENTSCHRIFT**

(45) Veröffentlichungstag der Patentschrift :
02.12.81

(51) Int. Cl.³ : **B 23 C   3/06**

(21) Anmeldenummer : **79102319.5**

(22) Anmeldetag : **09.07.79**

(54) **Kurbelwellenfräsmaschine.**

(30) Priorität : 19.08.78 DE 2836383

(43) Veröffentlichungstag der Anmeldung :
02.04.80 (Patentblatt 80/07)

(45) Bekanntmachung des Hinweises auf die Patenterteilung : 02.12.81 Patentblatt 81/48

(84) Benannte Vertragsstaaten :
**AT CH FR GB IT SE**

(56) Entgegenhaltungen :
**DE - 1 - 2 618 093**
**DE - B1 - 2 836 341**
**US - A - 3 013 457**
**US - A - 3 460 413**
**WERKSTATT UND BETRIEB,**
**Band 110, Nr. 3, März 1977,**
**München**
**O. GUNSSER « Schruppbearbeitung geschmiedeter**
**Kurbelwellen »**
**Seiten 137 bis 145**

(73) Patentinhaber : **Gebr. Heller Maschinenfabrik GmbH**
**Postfach 1428**
**D-7440 Nürtingen (DE)**

(72) Erfinder : **Schmid, Karlheinz**
**Amselweg 2**
**D-7441 Neckartenzlingen (DE)**

(74) Vertreter : **Reinländer & Bernhardt Patentanwälte**
**Orthstrasse 12**
**D-8000 München 60 (DE)**

Kurbelwellenfräsmaschine

Die Erfindung betrifft eine Kurbelwellenfräsmaschine nach dem Oberbegriff des Anspruchs 1.

Das Fräswerkzeug wird bei bekannten Kurbelwellenfräsmaschinen dieser Art (DE-A1-2 618 093) in teilbaren Halbschalenlagern gelagert, die jeweils zum Auswechseln des Fräswerkzeugs geteilt werden mußten. Ein Werkzeugwechsel, wie er beispielsweise beschrieben ist in « Werkstatt und Betrieb » 110 (März 1977) Heft 3, S. 145, konnte deshalb nur von erfahrenen Fachkräften vorgenommen werden und beanspruchte eine erhebliche Zeit.

Aufgabe der Erfindung ist es, den Werkzeugwechsel bei derartigen Kurbelwellenfräsmaschinen zu vereinfachen und zu beschleunigen, so daß der Werkzeugwechselvorgang auch von angelernten Kräften in wesentlich kürzerer Zeit als bisher durchgeführt werden kann.

Erfindungsgemäß wird diese Aufgabe durch die im Kennzeichenteil des Anspruchs 1 aufgeführten Maßnahmen gelöst.

Zusätzlich zu der Beschleunigung und Vereinfachung des Werkzeugwechsels ergibt sich durch die erfindungsgemäße Lösung noch der Vorteil, daß die bisher erforderliche gesonderte Fräserprüfvorrichtung überflüssig wird, weil die Prüfung des Fräsers bereits in dem Lagerblock vorgenommen werden kann. Außerdem ergibt sich noch der Vorteil, daß das Fräswerkzeug ohne Veränderung der Werkzeugwechselzeit an beliebig vielen Stellen gelagert werden kann, so daß eine bessere Abstützung des Fräswerkzeuges und damit eine höhere Genauigkeit und bessere Standzeit des Fräswerkzeuges erreicht werden können.

Da normalerweise bei Kurbelwellenfräsmaschinen der eingangs genannten Art die axiale Festlegung des Fräswerkzeuges durch eine Axiallagerung der Antriebsspindel und eine entsprechende Verbindung von Antriebsspindel und Fräswerkzeug (Kurzkegel) gewährleistet wird, ist eine axiale Festlegung des Fräswerkzeuges und/oder Lagerblocks grundsätzlich nicht erforderlich. Wenn aber der Vorteil, den Lagerblock gleich als Prüfvorrichtung für das Fräswerkzeug zu verwenden, ausgenutzt wird, kann eine bessere Genauigkeit erreicht werden, wenn bereits während des Prüfvorganges eine axiale Festlegung des Fräswerkzeuges mit Bezug auf die Lager gewährleistet ist, dann ist es allerdings auch erforderlich, den Lagerblock mit Bezug auf die Maschine axial festzulegen, und das wird gemäß einer speziellen Ausbildung der Erfindung durch die Merkmale des Anspruchs 2 erreicht.

Die Erfindung soll anhand der Zeichnung näher erläutert werden ; es zeigen :

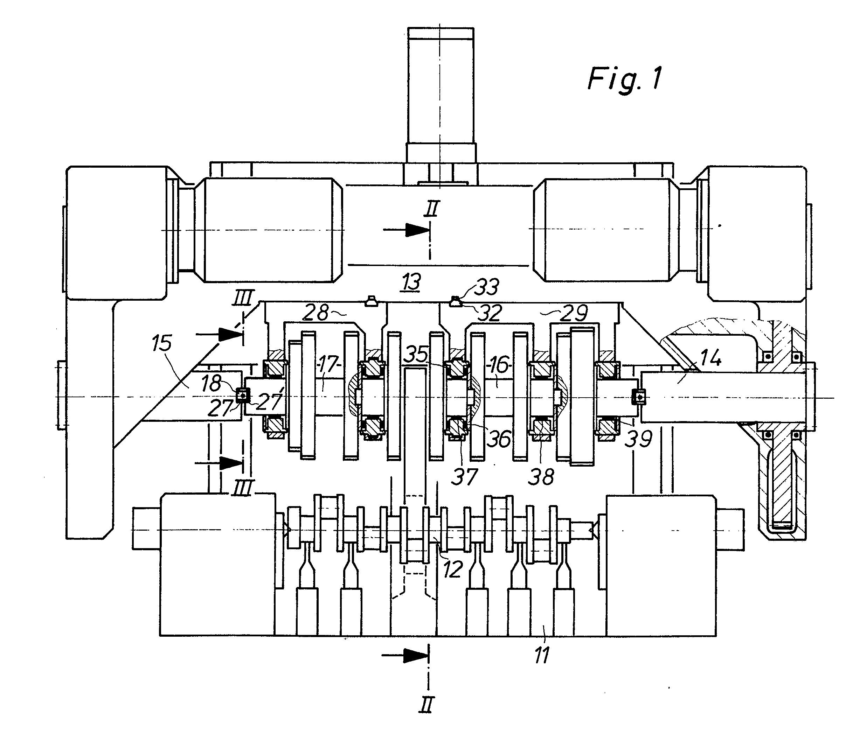

Fig. 1 eine teilweise geschnittene Draufsicht auf eine Kurbelwellenfräsmaschine ; und

Fig. 2 einen Schnitt längs der Linie II-II in Fig. 1.

Die in der Zeichnung dargestellte Kurbelwellenfräsmaschine besteht aus einem Maschinenbett 11, auf dem die Kurbelwelle 12 zwischen Zentrierspitzen gelagert ist, und einem Frässchlitten 13, der auf Kurbelwelle 12 zu bewegbar ist und in dem zwei Antriebsspindeln 14 und 15 drehbar gelagert sind, mit denen jeweils ein Fräswerkzeug 16 bzw. 17 gekuppelt ist, das mehrere, in axialem Abstand voneinander befindliche Scheibenfräser aufweist und seinerseits ebenfalls im Frässchlitten 13 gelagert ist, wie noch näher erläutert wird.

Die Kupplung zwischen der Antriebsspindel 15 und dem Fräswerkzeug 17 besteht aus einem spreizbaren Querkeil 18. Der Querkeil 18 sitzt in entsprechenden Nuten 27, 27' des Fräswerkzeugs 17 bzw. der Antriebsspindel 15, so daß Drehmomente übertragen werden können, Axialkräfte aber nicht, da sich bei Auftreten von Axialkräften die Außenflächen des Querkeils 18 gegen die Innenflächen der Nuten 27, 27' verschieben.

Eine solche Verbindung mit spreizbarem Querkeil wird derzeit zur Ausführung der Erfindung bevorzugt, kann jedoch auch durch andere Verbindungen ersetzt werden, die Drehmomente, aber keine Axialkräfte übertragen.

Die Verbindung zwischen der Antriebsspindel 14 und dem Fräswerkzeug 16 ist in gleicher Weise aufgebaut.

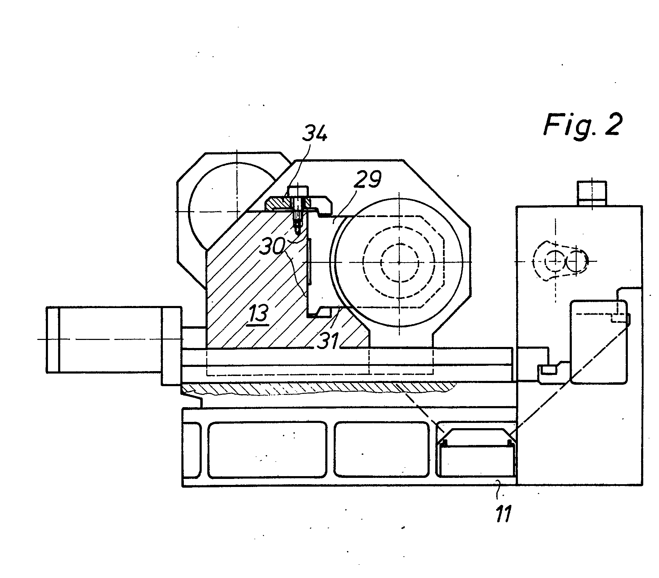

Im Frässchlitten 13 sind zwei Lagerblöcke 28 und 29 angeordnet. Der Lagerblock 29 ist durch eine Paßfläche 30 und eine zweite, dazu senkrechte Paßfläche 31 mit Bezug auf die Antriebsspindel 14 zentriert und durch einen Paßkeil 32 und eine entsprechende Paßnute 33 im Schlitten 13 in Richtung der Spindelachse festgelegt. Durch Klammern, von denen eine bei 34 in Figur 2 dargestellt ist, wird er in der zentrierten Stellung gehalten.

Der Lagerblock 28 ist in gleicher Weise im Frässchlitten 13 zentriert.

Der Lagerblock 29 weist ein Axiallager, bestehend aus zwei auf gegenüberstehenden Flächen laufenden Nadellagern 35 und 36, und drei Radiallager 37, 38 und 39 auf, in denen das Fräswerkzeug 16 gelagert ist.

In ähnliger Weise weist der Lagerblock 28 ein Axiallager und zwei Radiallager auf, eine nähere Erläuterung erscheint überflüssig.

Im Betrieb wird zunächst das Fräswerkzeug 16 im Lagerblock 29 außerhalb der Maschine geprüft, so daß die bisher erforderliche gesonderte Fräserprüfvorrichtung überflüssig wird. Dabei können natürlich eventuell Wendeplatten gewendet bzw. ausgewechselt werden, soweit erforderlich. Anschließend wird der Lagerblock 29 mit dem Fräswerkzeug 16 in den Schlitten 13 eingesetzt, wobei sich der Lagerblock an den erwähnten Paßflächen zentriert bzw. mit dem Paßkeil in axialer Richtung festgelegt wird, wodurch auch das fräswerkzeug 19 sofort zentriert ist. Anschließend wird die Antriebsverbindung zur Antriebsspindel 14 bei der dargestellten Ausführungsform durch Einsetzen des Querkeils 18 hergestellt. Die gleichen Vorgänge gelten auch für den dargestellten Lagerblock 28 mit dem Fräswerkzeug 17, eine Wiederholung ist überflüssig.

Durch die einwandfreie Lagerung der Fräswerkzeuge ergibt sich eine bessere Abstützung und damit eine größere Bearbeitungsgenauigkeit und Standzeit der Fräswerkzeuge. Wie schematisch für die Antriebsspindel 14 angedeutet, kann diese im Vergleich zu Frässpindeln mit wesentlich geringerem Aufwand gelagert werden, so daß der Aufwand an dieser Stelle reduziert ist der Aufwand für die Bearbeitung der Antriebsspindeln 14 und 15 und der Fräswerkzeuge 16 und 17 ist darüber hinaus noch erheblich dadurch verringert, daß die bisher notwendige aufwendige Kurzkegelverbindung (mit einer Kegelpaßfläche und einer Paß-Planfläche, die aufeinander abgestimmt werden müssen) entfällt.

Durch die Lagerung der Fräswerkzeuge in Lagergestellen ist darüber hinaus die Auswechslung der Fräswerkzeuge gegenüber dem Stand der Technik wesentlich vereinfacht und beschleunigt.

**Ansprüche**

1. Kurbelwellenfräsmaschine mit wenigstens einer in einem Frässchlitten (13) gelagerten Antriebsspindel (14, 15) und mit jeweils einem mit dieser kuppelbaren, als Satzfräser ausgebildeten Fräswerkzeug (16, 17), das eine oder mehrere, in axialem Abstand voneinander zwischen Einzelfräsern angeordnete Lagerstellen (35-39) zum Lagern im Frässchlitten aufweist, dadurch gekennzeichnet, daß das Fräswerkzeug (16, 17) mit allen seinen Lagerstellen in einem nach Lösen einer Antriebskupplung (18) zusammen mit dem Fräswerkzeug (16, 17) aus dem Frässchlitten (13) herausnehmbaren Lagerblock (28, 29) gelagert ist, der durch Paßflächen (30, 31) mit Bezug auf die Frässpindel (14) im Frässchlitten (13) zentrierbar und durch Spanneinrichtungen (34) festklemmbar ist.

2. Kurbelwellenfräsmaschine nach Anspruch 1, dadurch gekennzeichnet, daß der Lagerblock (28, 29) in Richtung der Achse des Fräswerkzeuges (16, 17) durch einen in eine Paßnut (33) des Frässchlittens (13) eingreifenden Paßkeil (32) festlegbar ist.

**Claims**

1. Crankshaft milling machine having at least one drive spindle (14, 15) supported in a milling slide (13) and each one milling tool (16, 17) adapted to be coupled thereto and designed as a gang cutter having one or more bearing locations (35-39) axially spaced from each other and disposed between individual cutters, for rotatably supporting same in the milling slide, characterized in that said milling tool (16, 17) with all its bearing locations is supported in a bearing block (28, 29) removable, together with said milling tool (16, 17), from said milling slide (13) after disconnecting a drive coupling (18), which bearing block is adapted to be centered in said milling slide (13) with respect to said milling spindle (14) by means of centering faces (30, 31) and to be clamped by clamping means (34).

2. Crankshaft milling machine according to claim 1, characterized in that said bearing block (28, 29) is adapted to be fixed in the direction of the axis of said milling tool (16, 17) by a centering wedge (32) extending into a centering groove (33) of said milling slide (13).

**Revendications**

1. Fraiseuse de vilebrequins, comprenant au moins une broche (14, 15) d'entraînement montée sur un chariot (13) de fraisage et un outil (16, 17) de fraisage, en forme de fraise d'un jeu combiné, qui peut être accouplé à la broche et qui présente un ou plusieurs points (35 à 39), interposés entre les fraises et à distance les uns des autres suivant l'axe, d'appui sur le chariot (13) de fraisage, caractérisée en ce que l'outil (16, 17) est monté, avec tous ses points d'appui, dans un bloc (28, 29) qui forme palier, qui peut, après avoir été séparé d'un accouplement (18) d'entraînement, être sorti en même temps que l'outil (16, 17) du chariot (13), qui peut être centré dans le chariot (13) par des surfaces (30, 31) d'ajustage par rapport à la broche (14) et qui peut être bloqué par des dispositifs (34) de blocage.

2. Fraiseuse de vilebrequins suivant la revendication 1, caractérisée en ce que le bloc (28, 29) peut être immobilisé suivant la direction de l'axe de l'outil (16, 17) par un coin (32) d'ajustage s'engageant dans une gorge (33) conjuguée du chariot (13).

*Fig. 1*

*Fig. 2*